# FASCICULE DE BREVET EUROPEEN

(11) **EP 2 088 665 B1**
(45) Date de publication et mention de la délivrance du brevet: **29.04.2015**
(21) Numéro de dépôt: 09152306.8
(22) Date de dépôt: 06.02.2009
(51) Int. Cl.: H02K 15/03, H02K 1/27

(54) **Procédé de montage d'un pôle magnétique et rotor associé.**
Montageverfahren eines magnetischen Pols und zugehörigem Rotor
Method of installing a magnetic pole and associated rotor

(30) Priorité: 08.02.2008 FR 0850804
(43) Date de publication de la demande: 12.08.2009
(73) Titulaire: ALSTOM Transport Technologies, 92300 Levallois-Perret (FR)
(72) Inventeur: Randria, Andry, 25000 Besancon (FR)
(74) Mandataire: Blot, Philippe Robert Emile

(56) Documents cités:
- EP-A- 0 996 212
- EP-A- 1 315 267
- EP-A- 1 439 626
- EP-A- 1 605 574
- EP-A- 1 646 126
- DE-A1-102006 004 537

## Description

La présente invention concerne un procédé de montage d'un pôle magnétique d'un rotor pour machine tournante électrique synchrone, par exemple pour moteur électrique ou un alternateur.

Le document EP 1 646 126 décrit un rotor comportant des pôles magnétiques constitués par une pluralité d'aimants permanents distincts, séparés les uns des autres par une feuille électriquement isolante interposée entre ceux-ci.

Il est connu de former de tels pôles magnétiques selon les étapes suivantes, ordonnées selon l'ordre décrit.

Tout d'abord, des éléments élémentaires de forme parallélépipédique rectangle sont magnétisés pour former des aimants élémentaires permanents. Puis, les aimants élémentaires sont collés les uns à côté des autres avec interposition d'une feuille électriquement isolante. Le bloc ainsi monté est fixé dans un évidement formé sur le pourtour du moyeu du rotor. L'évidement présente un fond de forme convexe. Les aimants élémentaires sont collés les uns aux autres et au fond convexe de l'évidement avec leurs pôles magnétiques (nord/sud) dirigés selon les mêmes directions.

Toutefois, l'étape de collage des aimants élémentaires est très longue car les aimants élémentaires sont fixés les uns aux autres et qu'ils se repoussent.

De plus, comme la surface plane des aimants élémentaires est fixée sur une surface de fond convexe, il existe des interstices formant des fissures ou failles tronconiques à la surface du pôle magnétique ainsi formé.

Le document EP 0 996 212 A1 divulgue un procédé de fabrication d'un rotor à aimants permanents pour une machine électrique comprenant successivement : la fourniture d'une plaque de support, présentant une surface convexe de rayon R ; la fixation d'aimants élémentaires non-magnétisés, par collage entre eux et sur la surface convexe de la plaque, jusqu'à former un pôle complet ; la magnétisation du pôle ; le montage du pôle magnétisé sur un manchon présentant une surface extérieure cylindrique, la section d'un aimant étant adaptée pour que la surface intérieure du pôle présente un rayon égal au rayon de la surface extérieure du manchon ; l'application d'un écran conducteur du courant électrique sur la surface extérieure du pôle magnétisé ; et, le montage d'une frette autour de l'écran 18.

EP 1 315 267 A2 divulgue l'association par collage de plusieurs aimants élémentaires et l'usinage de cet ensemble

L'invention a pour but de proposer un procédé de montage d'un pôle magnétique plus facile et plus rapide.

A cet effet, l'invention a pour objet un procédé de réalisation d'un rotor pour machine tournante électrique synchrone et un rotor pour machine tournante électrique synchrone conformes aux revendications.

L'invention sera mieux comprise à la lecture de la description qui va suivre, donnée uniquement à titre d'exemple et faite en se référant aux dessins, sur lesquels :
- la figure 1 est une vue en coupe axiale d'un moteur électrique à aimants permanents comprenant un rotor conforme à l'invention ;
- la figure 2 est une vue en coupe selon un plan II-II du rotor de la figure 1 ;
- la figure 3 est un organigramme représentant les étapes du procédé de montage d'un pôle magnétique selon l'invention ;
- la figure 4 est une vue en perspective d'un élément élémentaire ;
- la figure 5 est une vue en perspective d'un bloc d'éléments élémentaires ;

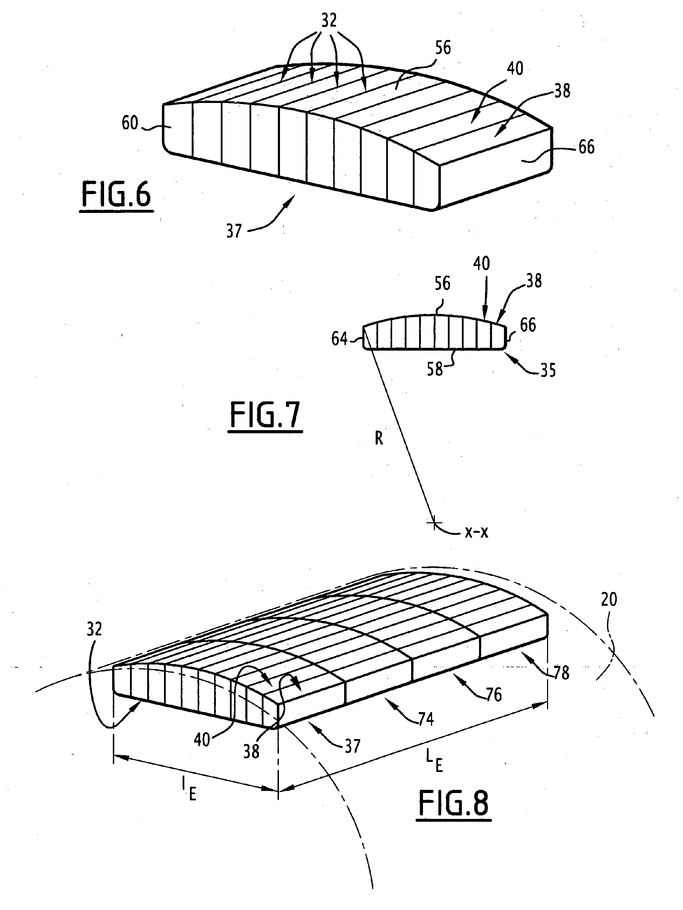

- la figure 6 est une vue en perspective du bloc de la figure 5 après usinage ;
- la figure 7 est une vue de côté du bloc de la figure 6 ; et
- la figure 8 est une vue en perspective de quatre blocs d'éléments élémentaires fixés dans un évidement d'un rotor.

L'invention concerne un procédé de montage de pôles magnétiques sur un rotor d'une machine tournante électrique synchrone. Ce procédé est décrit à titre d'exemple par le montage de pôles magnétiques 2, 4 sur le rotor 6 d'un moteur électrique 8.

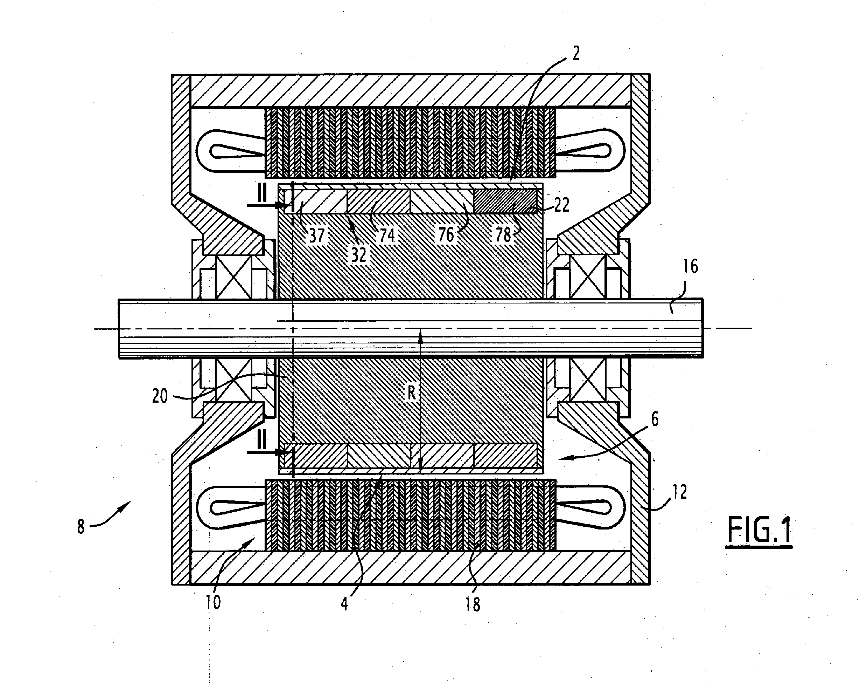

Comme représenté sur la figure 1, le moteur électrique 8 comprend un stator 10 solidaire d'un carter 12, et un rotor 6 solidaire d'un arbre 16.

Le stator 10 entoure le rotor 6. II comprend des bobinages 18 propres à générer un flux magnétique.

Le rotor 6 comprend un moyeu 20 solidarisé en rotation à l'arbre 16 par des moyens d'entraînement, non représentés, comme par exemple des cannelures. Le moyeu 20 présente une forme externe cylindrique de rayon prédéfini R. Le moyeu 20 est constitué exclusivement d'un métal ou d'un alliage métallique conducteur de champ magnétique, en particulier d'un matériau ferromagnétique.

Des évidements 22, 24 sont formés sur le pourtour du moyeu 20. Les évidements 22, 24 sont régulièrement espacés les uns des autres.

Les évidements 22, 24 sont destinés à recevoir des aimants permanents pour constituer le pôle magnétique 2.

Les évidements 22, 24 présentent une paroi de fond 34 plate. Les évidements 22, 24 ont une largeur et une longueur égales à la largeur I_{E} et à la longueur LE du pôle magnétique 2.

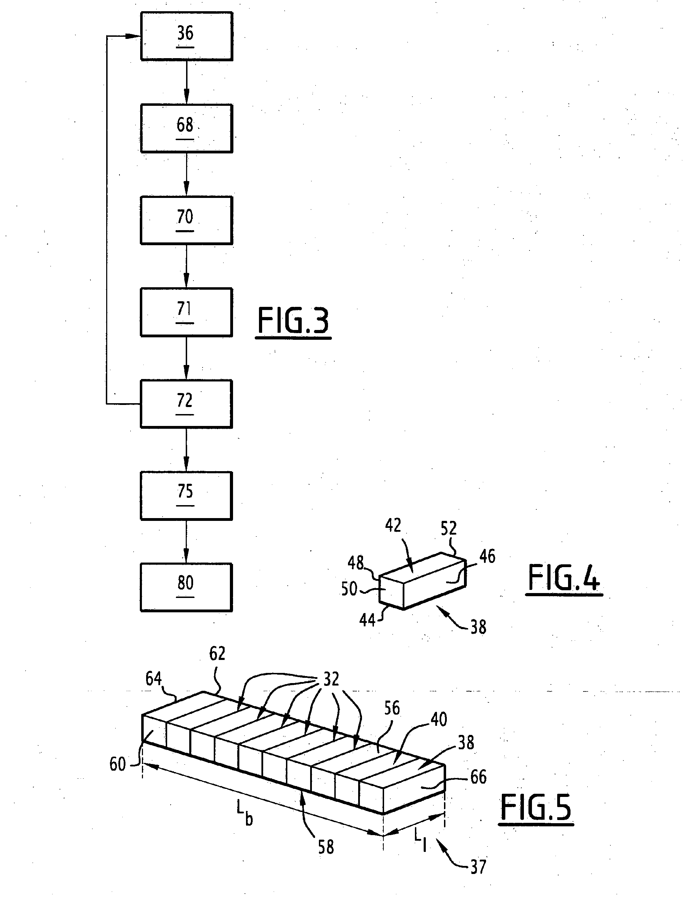

Le procédé de montage d'un pôle magnétique 2 selon l'invention est illustré sur la figure 3. II débute par une étape 36 de formation d'un bloc d'éléments élémentaires 37 par collage d'éléments élémentaires 38, 40 les uns aux autres avec interposition d'un isolant électrique 32 sous forme de feuille, ci-après appelé feuille isolante 32.

Chaque élément élémentaire 38, 40 est formé dans un matériau magnétisable tel qu'un matériau magnétiquement dur.

Plusieurs éléments élémentaires, par exemple entre 1 et 20, de préférence entre 6 et 10, sont collés les uns autres pour former le bloc 37.

Comme visible sur la figure 4, chaque élément élémentaire 38 présente une forme parallélépipédique rectangle ayant deux faces principales 42, 44, deux faces longitudinales 46, 48 et deux faces latérales 50, 52.

II présente par exemple une largeur de 6 mm, une longueur de 30 à 60 mm et une épaisseur d'environ 15 mm.

La face principale 42, 44 d'un élément élémentaire a une largeur égale de 0,05 à 1 fois la largeur I_{E} du pôle magnétique 2.

La face principale 42, 44 d'un élément élémentaire a une longueur égale de 0,05 à 1 fois la longueur LE d'un pôle magnétique 2.

L'ensemble de la surface des faces longitudinales 46, 48 de chaque élément élémentaire 38, 40 est fixé à l'ensemble de la surface de chaque feuille isolante 32 de sorte que le bloc 37 forme un bloc massif, d'un seul tenant. Ainsi, la surface extérieure du bloc 37 est continue. Le bloc 37 ne comporte pas de failles ou de fissures.

La feuille isolante 32 permet d'isoler électriquement les aimants les uns des autres pour réduire les pertes électriques provenant de la circulation de courants de Foucault induits par les flux magnétiques circulant entre le rotor et le stator.

La feuille isolante 32 n'empêche pas la circulation des flux magnétiques.

La feuille isolante 32 est réalisée par exemple dans un papier composé de fibres méta-aramides connues sous le nom de « Nomex » (marque déposée) ou un film polyimide connu sous le nom de « Kapton » (marque déposée), ou toute autre matière électriquement isolante telle qu'un polymère technique pur ou chargé.

La feuille isolante 32 présente une faible épaisseur (par exemple de 20 µm) par rapport à l'épaisseur des éléments élémentaires 38, 40.

Le bloc 37 présente une forme rectangulaire parallélépipédique. Il possède deux faces principales 56, 58, deux faces longitudinales 60, 62, et deux faces latérales 64, 66.

La longueur L_{b} d'une face longitudinale 60 du bloc 37 est égale à la largeur I_{E} du pôle magnétique 2. La longueur L_{I} d'une face latérale 64, 66 du bloc 37 est égale à 0,05 à 1 fois la longueur LE du pôle magnétique 2.

Puis, au cours d'une étape d'usinage 68, une face principale 56 du bloc est usinée de manière à ce que cette face présente une forme cylindrique de rayon R égal au rayon R du moyeu 20 destiné à recevoir le bloc 37.

La face de forme cylindrique 56 présente un axe X-X de cylindre perpendiculaire aux faces longitudinales 60, 62 du bloc d'éléments élémentaires 37 et parallèle aux faces latérales 64, 66 du bloc d'éléments élémentaires 37.

Au cours d'une étape 70, le bloc 37 est magnétisé par un dispositif propre à lui appliquer un champ magnétique important.

La magnétisation d'un bloc est avantageusement réalisée à ce stade, car il n'est pas possible de le faire lorsque les pôles sont constitués sur le rotor en raison des dimensions du rotor et des pôles, et des énergies à mettre en jeu pour la magnétisation.

Le bloc 37 est magnétisé de façon à ce que l'axe magnétique généré par magnétisation s'étende parallèlement aux faces longitudinales 46, 48 des éléments élémentaires 38, 40 le constituant.

Au cours de l'étape 70, seul le bloc 37 est magnétisé, c'est-à-dire que ce bloc n'est pas magnétisé avec le moyeu 20 ou avec un support de réception du bloc 37.

Le bloc 37 ainsi constitué forme un ensemble continu (sans failles) d'aimants permanents accolés les uns aux autres avec interposition d'une feuille isolante.

Comme le bloc 37 constitue uniquement une partie du pôle 2 qui s'étend selon la largeur du pôle, la taille du bloc 37 est suffisamment petite pour qu'un dispositif d'aimantation disponible dans le commerce puisse l'aimanter.

Au cours d'une étape 71, une feuille isolante 32 est collée sur la paroi de fond 34 de l'évidement 22. A l'étape 72, la face principale 58 plane du bloc magnétisé 37 est collée sur cette feuille isolante 32. Le bloc 37 est positionné de manière à ce que sa face longitudinale 60 forme la face latérale du pôle magnétique 2.

La hauteur du bloc 37 correspond à la profondeur des évidements 22, 24 de sorte que la forme cylindrique de la face usinée 56 coïncide avec la forme cylindrique du moyeu 20.

Puis, les étapes 36 à 72 sont répétées pour réaliser et fixer trois autres blocs magnétisés 74, 76, 78 dans l'évidement 22 avec interposition d'une feuille isolante 32. Les blocs magnétisés 37, 74, 76, 78 forment l'ensemble du pôle magnétique 2.

Les blocs magnétisés 37, 74, 76 et 78 fixés dans un même évidement 22 présentent tous les mêmes polarités.

Ensuite, quatre blocs magnétisés de polarités inverses sont réalisés et collés dans l'évidement 24 avec interposition d'une feuille isolante 32 adjacent à l'évidement 22 pour réaliser un nouveau pôle magnétique 4.

Lorsque l'ensemble des pôles magnétiques est réalisé sur le moyeu 20, au cours d'une étape 75, une feuille isolante 32 est collée sur l'ensemble du rotor 6 muni des pôles magnétiques ainsi formés. Cette feuille isolante permet d'éviter les courts-circuits entre les pôles.

Enfin, une frette 79 de maintien des pôles magnétiques 2, 4 est monté autour de celui-ci au cours d'une étape 80.

La frette est réalisée dans un matériau composite tel que par exemple du verre, du carbone et en fibres aramides connues sous le nom de Kevlar (marque déposée).

La feuille isolante 32 est collée sur l'ensemble des pôles magnétiques au cours de l'étape 75 que lorsque la frette est réalisée en matériau non isolant typiquement en fibres de carbone.

En variante, les évidements 22 et 24 présentent une faible profondeur de 1 à 2 mm et des cales interpolaires sont interposées entre chaque pôle magnétique.

En variante, la feuille isolante 32 est remplacée par une colle chargée en particules solides électriquement non conductrice ou une colle chargée en fibres de matériau électriquement non conducteur.

La feuille isolante 32 interposée entre les blocs magnétisés 74, 6, 78 peuvent être réalisés dans un matériau différent que la feuille isolante 32 fixée entre les éléments élémentaires 38, 40.

En variante, la feuille isolante 32 n'est pas collée sur l'ensemble du rotor 6 mais elle est collée uniquement sur chaque pôle magnétique 2, 4.

En variante, les éléments élémentaires 38, 40 peuvent avoir une hauteur différente pour minimiser la quantité de matière à enlever lors de l'étape 68 d'usinage.

En variante également, les éléments élémentaires ont des hauteurs différentes et présentent chacun une face principale 42 formant une portion de la surface cylindrique de sorte qu'il n'est pas nécessaire d'usiner la face principale 56 du bloc d'éléments élémentaires 37.

En variante également, les éléments élémentaires présentent une forme parallélépipédique ayant une face principale de largeur et de longueur égales à celles du pôle magnétique mais de hauteur inférieure à celui-ci. Dans ce mode de réalisation, le pôle magnétique est formé par empilage suivant l'axe du rotor d'éléments élémentaires.

Avantageusement, la feuille isolante 32 qui enrobe facilite le montage de la frette 79.

Avantageusement, le procédé est appliqué pour réaliser tout rotor de machine tournante électrique synchrone où il est nécessaire de réduire les pertes électriques provenant du courant de Foucault induit par les flux magnétiques circulant entre le stator et le rotor.

En particulier, le procédé selon l'invention peut être appliqué pour réaliser le rotor de moteurs dont le diamètre du rotor est supérieur à 100 mm, ou de moteurs à forte puissance (puissance supérieure à 50 KW).

Avantageusement, il est facile de coller les éléments élémentaires 38, 40 les uns aux autres avant magnétisation de ceux-ci. Ainsi, le montage d'un pôle magnétique est plus facile et plus rapide.

Avantageusement, les éléments élémentaires sont fixés les uns aux autres sur toute leur surface de sorte qu'ils constituent un ensemble monobloc ne comportant pas d'interstice ou de fissure entre les éléments élémentaires. Ainsi, le pôle magnétique ainsi constitué résiste mieux aux pressions mécaniques générées par le couple moteur lorsque le rotor est mis en rotation.

Avantageusement, la face externe du pôle magnétique 2 ainsi constitué est parfaitement cylindrique.

Avantageusement, cette méthode de montage permet de réaliser des rotors à moindre coût.

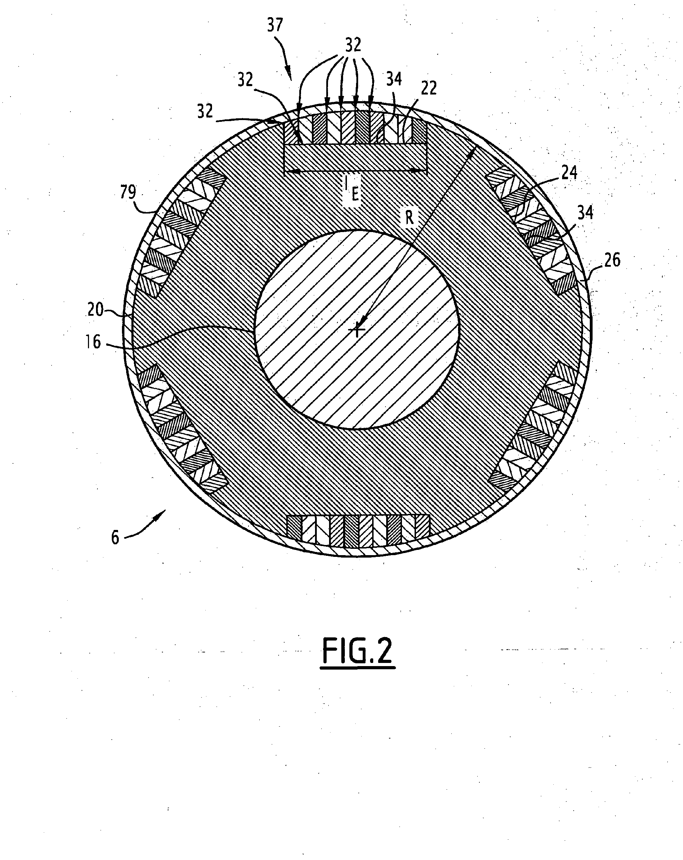

Plus généralement, l'invention a également pour objet un moteur électrique comprenant un rotor tel qu'illustré sur les figures 1 et 2 ayant un moyeu 20 sur lequel des pôles magnétiques sont réalisés selon le procédé décrit ci-dessus.

## Revendications

1. Procédé de réalisation d'un rotor (6) pour machine tournante électrique synchrone (8), le rotor (6) comprenant un moyeu (20), constitué exclusivement d'un métal ou d'un alliage métallique conducteur du champ magnétique et présentant une forme externe cylindrique de rayon prédéfini (R), et au moins un pôle magnétique (2,4), constitué d'aimants permanents réalisés par magnétisation d'éléments élémentaires (38,40) en un matériau magnétisable, chaque élément élémentaire présentant une forme parallélépipédique rectangle ayant deux faces principales (42, 44), deux faces longitudinales (46, 48) et deux faces latérales (50, 52), **caractérisé en ce qu'**il comprend :
- la formation, sur le pourtour du moyeu, d'évidements (22,24) régulièrement espacés les uns des autres et destinés à recevoir des aimants permanents pour constituer un pôle magnétique, chaque évidement ayant une largeur et une longueur égales à la largeur et à la longueur dudit pôle magnétique et présentant une surface de fond plane (34),
puis les étapes successives suivantes pour former un pôle magnétique :
- formation (36) d'un bloc (37, 74, 76, 78), présentant une forme parallélépipédique rectangle et possédant deux faces principales (56, 58), deux faces longitudinales (60, 62) et deux faces latérales (64, 66), par fixation d'au moins deux éléments élémentaires (38, 40) l'un à l'autre, selon leurs faces longitudinales, avec interposition d'un isolant électrique (32) entre celles-ci, de sorte que le bloc (37) formé est massif et d'un seul tenant ;
- usinage (68) d'une face principale (56) du bloc (37, 74, 76, 78) pour former une face de forme cylindrique ayant un rayon sensiblement égal au rayon (R) du moyeu (20) ;
- magnétisation (70) du bloc (37, 74, 76, 78), de façon à ce que l'axe magnétique généré par magnétisation s'étende parallèlement aux faces longitudinales (46, 48) des éléments élémentaires (38, 40) constituant le bloc ; et,
- fixation (72) du bloc (37, 74, 76, 78) dans l'évidement du moyeu (20), l'autre face principale (58) plane du bloc étant fixée contre la surface de fond plane (34) de l'évidement, ledit bloc (37, 74, 76, 78) formant une partie du pôle magnétique (2, 4),
les étapes de formation, d'usinage, de magnétisation et de fixation d'un bloc étant répétées jusqu'à former l'ensemble dudit pôle magnétique (2, 4), les blocs (37, 74, 76, 78) étant fixés sur le moyeu (20) les uns à côté des autres, avec interposition d'un isolant électrique (32) entre les blocs.

2. Procédé selon la revendication 1, **caractérisé en ce que** les éléments élémentaires (38, 40) sont fixés l'un à l'autre à l'aide d'une colle, et **en ce que** l'isolant électrique (32) est une feuille électriquement isolante.

3. Procédé selon la revendication 1, **caractérisé en ce que** les éléments élémentaires (38, 40) sont fixés l'un à l'autre à l'aide d'une colle chargée en particules solides ou d'une colle chargée en fibres de matériau non conducteur, ladite colle formant l'isolant électrique (32).

4. Procédé selon l'une quelconque des revendications 1 à 3, **caractérisé en ce qu'**il comporte une étape de fixation (71) d'un isolant électrique (32) sur le moyeu (20), l'isolant électrique (32) étant interposé entre le moyeu (20) et lesdites blocs (37, 74, 76, 78).

5. Procédé selon l'une quelconque des revendications 1 à 4, **caractérisé en ce qu'**il comporte une étape de fixation (75) d'un isolant électrique (32) sur la face de forme cylindrique (56) des blocs (37, 74, 76, 78).

6. Procédé selon l'une quelconque des revendications 1 à 5, **caractérisé en ce qu'**un bloc (37, 74, 76, 78) comprend 1 à 20 éléments élémentaires (38, 40).

7. Rotor (6) pour machine tournante électrique synchrone (8) comportant un moyeu (20), **caractérisé en ce qu'**il est obtenu par la mise en oeuvre d'un procédé selon l'une quelconque des revendications 1 à 6, le moyeu (20) comprenant des évidements (22, 24) dont la surface de fond (34) est plane, des blocs d'éléments élémentaires (37, 74, 76, 78) présentant une surface plane fixée contre ladite surface de fond (34), et une surface usinée de forme cylindrique dont le rayon (R) est égal au rayon (R) du moyeu.

## Patentansprüche

1. Verfahren zur Herstellung eines Rotors (6) für eine rotierende elektrische Synchronmaschine (8), wobei der Rotor (6) eine Nabe (20), die ausschließlich aus einem Metall oder einer ein magnetisches Feld leitenden Metalllegierung besteht und eine äußere zylindrische Form mit vorbestimmtem Radius (R) aufweist, und mindestens einen Magnetpol (2, 4) umfasst, der aus Dauermagneten besteht, die durch Magnetisierung von Elementarelementen (38, 40) aus einem magnetisierbaren Material hergestellt sind, wobei jedes Elementarelement eine Quaderform aufweist, die zwei Hauptflächen (42, 44), zwei Längsflächen (46, 48) und zwei Seitenflächen (50, 52) besitzt, **dadurch gekennzeichnet, dass** es umfasst:
- die Bildung von gleichmäßig voneinander beabstandeten Ausnehmungen (22, 24) auf dem Umfang der Nabe, die dazu dienen, Dauermagnete zur Bildung eines Magnetpols aufzunehmen, wobei jede Ausnehmung eine Breite und eine Länge besitzt, die gleich der Breite und der Länge des Magnetpols sind, und eine ebene Bodenfläche (34) aufweist,
dann die aufeinanderfolgenden Schritte zur Bildung eines Magnetpols:
- Bildung (36) eines Blocks (37, 74, 76, 78), der eine Quaderform aufweist und zwei Hauptflächen (56, 58), zwei Längsflächen (60, 62) und zwei Seitenflächen (64, 66) besitzt, durch Befestigung von mindestens zwei Elementarelementen (38, 40) aneinander gemäß ihren Längsflächen unter Einfügung eines elektrischen Isoliermittels (32) zwischen ihnen, derart, dass der gebildete Block (37) massiv und zusammenhängend ist;
- Bearbeitung (68) einer Hauptfläche (56) des Blocks (37, 74, 76, 78) zur Bildung einer zylinderförmigen Fläche, die im Wesentlichen einen Radius gleich dem Radius (R) der Nabe (20) aufweist;
- Magnetisierung (70) des Blocks (37, 74, 76, 78), derart, dass sich die durch die Magnetisierung erzeugte Magnetachse parallel zu den Längsflächen (46, 48) der Elementarelemente (38, 40) erstreckt, die den Block bilden; und
- Befestigung (72) des Blocks (37, 74, 76, 78) in der Ausnehmung der Nabe (20), wobei die andere ebene Hauptfläche (58) des Blocks an der ebenen Bodenfläche (34) der Ausnehmung befestigt wird, wobei der Block (37, 74, 76, 78) einen Teil des Magnetpols (2, 4) bildet,
wobei die Schritte der Bildung, der Bearbeitung, der Magnetisierung und der Befestigung eines Blocks wiederholt werden bis die Gesamtheit des Magnetpols (2, 4) gebildet wird, wobei die Blöcke (37, 74, 76, 78) auf der Nabe (20) nebeneinander unter Einfügung eines elektrischen Isoliermittels (32) zwischen den Blöcken befestigt werden.

2. Verfahren nach Anspruch 1, **dadurch gekennzeichnet, dass** die Elementarelemente (38, 40) aneinander mit Hilfe eines Klebstoffs befestigt werden und dass das elektrische Isoliermittel (32) eine elektrisch isolierende Folie ist.

3. Verfahren nach Anspruch 1, **dadurch gekennzeichnet, dass** die Elementarelemente (38, 40) mit Hilfe eines Klebstoffs, der mit Festpartikeln durchsetzt ist, oder eines Klebstoffs, der mit Fasern eines nicht leitenden Materials durchsetzt ist, aneinander befestigt werden, wobei der Klebstoff das elektrische Isoliermittel (32) bildet.

4. Verfahren nach einem beliebigen der Ansprüche 1 bis 3, **dadurch gekennzeichnet, dass** es einen Schritt der Befestigung (71) eines elektrischen Isoliermittels (32) an der Nabe (20) aufweist, wobei das elektrische Isoliermittel (32) zwischen der Nabe (20) und den Blöcken (37, 74, 76, 78) angeordnet wird.

5. Verfahren nach einem beliebigen der Ansprüche 1 bis 4, **dadurch gekennzeichnet, dass** es einen Schritt der Befestigung (75) eines elektrischen Isoliermittels (32) an der zylinderförmigen Fläche (56) der Blöcke (37, 74, 76, 78) aufweist.

6. Verfahren nach einem beliebigen der Ansprüche 1 bis 5, **dadurch gekennzeichnet, dass** ein Block (37, 74, 76, 78) 1 bis 20 Elementarelemente (38, 40) umfasst.

7. Rotor (6) für eine rotierende elektrische Synchronmaschine (8), der eine Nabe (20) aufweist, **dadurch gekennzeichnet, dass** er durch Durchführen des Verfahrens nach einem beliebigen der Ansprüche 1 bis 6 erhalten wird, wobei die Nabe (20) Ausnehmungen (22, 24), deren Bodenfläche (34) eben ist, Elementarelementblöcke (37, 74, 76, 78), die eine an der Bodenfläche (34) befestigte ebene Fläche aufweisen, und eine Fläche umfasst, die in zylindrischer Form bearbeitet ist, deren Radius (R) gleich dem Radius (R) der Nabe ist.

## Claims

1. Method for manufacturing a rotor (6) for a synchronous electrical rotating machine (8), the rotor (6) comprising a hub (20), made exclusively of a metal or a metal alloy conducting magnetic fields and having a cylindrical outer shape having a predefined radius (R), and at least a magnetic pole (2, 4), made of permanent magnets realised by the magnetisation of elementary elements (38, 40) made of a magnetisable material, each elementary element having a rectangular parallelepiped form having two main faces (42, 44), two longitudinal faces (46, 48) and two lateral faces (50, 52), **characterised in that** it comprises:
- forming, on the perimeter of the hub, recesses (22, 24), regularly spaced from one another and intended to receive the permanent magnets for forming a magnetic pole, each recess having a width and a length equal to the width and the length of said magnetic pole and provided with a plane bottom surface (34),
and the following successive steps to realise the magnetic pole:
- forming (36) a block (37, 74, 76, 78), having a rectangular parallelepiped shape and having two main faces (56, 58), two longitudinal faces (60, 62) and two lateral faces (64, 66), by fixing at least two elementary elements (38,40) one with the other, over their longitudinal faces, with the interposition of an electrical insulator (32) between them, so that the block (37) formed is massive and integral;
- machining (68) a main face (56) of the block (37, 74, 76, 78) in order to form a cylindrical face which has a radius which is substantially equal to the radius (R) of the hub (20);
- magnetising (70) the block (37, 74, 76, 78) so that the magnetic axis generated by the magnetisation lies parallel to the longitudinal faces (46, 48) of the elementary elements (38, 40) making the block; and,
- fixing (72) the block (37, 74, 76, 78) in the recess of the hub (20), the other plane main face (58) of the block being fixed on the plane bottom surface (34) of the recess, said block (37, 74, 76, 78) making a portion of the magnetic pole,
the steps of forming, machining, magnetising and fixing a block being repeated until the whole magnetic pole (2, 4) has been realised, the blocks (37, 74, 76, 78) being fixed on the hub (20) one next to the other, with the interposition of an electric insulator (32) between blocks.

2. Method according to claim 1, **characterised in that** the elementary elements (38, 40) are fixed to each other by means of an adhesive, and **in that** the electrical insulator (32) is an electrically insulating sheet.

3. Method according to claim 1, **characterised in that** the elementary elements (38, 40) are fixed to each other by means of an adhesive which is charged with solid particles or an adhesive which is charged with non-conductive material fibres, said adhesive forming the electrical insulator.

4. Method according to any one of claims 1 to 3, **characterised in that** it comprises a step of fixing (71) an electrical insulator (32) to the hub (20), the electrical insulator (32)being interposed between the hub (20) and said blocks (37, 74, 76, 78).

5. Method according to any one of claims 1 to 4, **characterised in that** it comprises a step of fixing (75) an electrical insulator (32) to the cylindrical face (56) of the blocks (37, 74, 76, 78).

6. Method according to any one of claims 1 to 5, **characterised in that** a block (37, 74, 76, 78) comprises from 1 to 20 elementary elements (38, 40).

7. Rotor (6) for a synchronous electrical rotating machine (8) comprising a hub (20), **characterised in that** it is manufactured by performing a method according to any one of claims 1 to 6, the hub (20) comprising recesses (22, 24), whose bottom surface (34) is plane, blocks of elementary elements (37, 74, 76, 78) having a plane face fixed on said bottom surface (34) and a machined face of the cylindrical type, whose radius (R) is equal to the radius (R) of the hub.
